# EUROPEAN PATENT SPECIFICATION

(11) **EP 0 910 915 B1**
(45) Date of publication and mention of the grant of the patent: **12.11.2003**
(21) Application number: 97930660.2
(22) Date of filing: 07.07.1997
(51) Int. Cl.: H04M 1/72, H04M 1/66, H04M 15/00, H04M 15/34

(54) **CORDLESS TELEPHONE APPARATUS WITH IDENTIFICATION OF THE INDIVIDUAL HANDSETS**
SCHNURLOSER TELEFONAPPARAT MIT KENNUNG DER EINZELNEN HÖRER
SYSTEME DE TELEPHONIE SANS FILS AVEC IDENTIFICATION DES DIFFERENTS COMBINES PORTATIFS

(30) Priority: 11.07.1996 EP 96305127
(43) Date of publication of application: 28.04.1999
(73) Proprietor: BRITISH TELECOMMUNICATIONS public limited company, London EC1A 7AJ (GB)
(72) Inventor: WARBURTON, Robert, John, Suffolk NR35 2SX (GB); BUTTERY, Stephen, John, Essex CO11 1NF (GB); MERRETT, Robert, Peter, Suffolk IP12 1LF (GB)
(74) Representative: Lidbetter, Timothy Guy Edwin
(86) International application number: GB9701849
(87) International publication number: WO98003003

(56) References cited:
- EP-A- 0 115 240
- EP-A- 0 129 843
- EP-A- 0 304 998
- EP-A- 0 342 707
- EP-A- 0 433 465
- EP-A- 0 571 291

## Description

This invention relates to telephone apparatus, in particular for use in a situation in which several people share the use of a single telephone exchange line, for example in a household. When several people use the same telephone exchange line it can be necessary to identify which user made each call, for example so that call charges can be attributed to each user fairly.

Some telecommunications service operators have proposed a system in which a special code (an "Account Code") is entered as additional dialled digits, either before or after dialling the required number, to allow connection to be authorised. Different users are allocated different codes. This arrangement finds use in particular where several different users have access to the same exchange line, and wish to apportion the costs of the resulting bill. It may also be used to allow certain classes of call (e.g. added value services or international calls) to be barred from certain users, since the exchange can be programmed to only permit those categories of call if the correct account code is transmitted. This system is clearly open to abuse by users dialling each other's codes, and also requires that each user remembers and keeps secret his/her own code.

European patent Application 0 115 240 (Grandmougin) discloses a public "Telepoint" system in which portable handsets may be used in conjunction with any one of a number of kiosks. The handsets communicate with the kiosks by infra red or other wireless communication means. In this arrangement the kiosk and handset exchange passwords to ensure that the handset is authorised to use the service. Information regarding the call, such as the identity of the handset and the duration of the call, is stored in the kiosk during the course of the call, and downloaded to a billing system associated with the telephone exchange at the end of the call.

European Patent specification 0783222 discloses an arrangement in which several handsets connected to the same exchange line transmit individual identification codes to the exchange, these codes being used to perform per-handset charging at the exchange.

A first aspect of the present invention provides a telephone subscriber base apparatus comprising means for connection to a telecommunications network exchange line and means for selectively establishing communication with one of a plurality of associated cordless handsets to enable telecommunication between individual handsets and the telecommunications network, wherein the handsets may each initiate outward calls over the exchange line by transmission of dialled digits and wherein the base apparatus includes identification means for identifying which of its associated cordless handsets is initiating a call, the base apparatus further including digit generation means controlled by the identification means for generating additional digits for transmission to the telecommunications network, indicative of the cordless handset which initiated the call; characterised in that the digit generation means is arranged to transmit the digits to the telecommunications network at call set-up.

A second aspect provides a telephone base subscriber apparatus having means for establishing wireless communication with each of a plurality of cordless handsets, means for receiving and verifying identification codes associated with each cordless handset, exchange line connection means for connection to an exchange line and means for transmitting dialled digits and other telecommunications signals between any of the cordless handsets and a telecommunications network by way of the exchange line connection, further comprising means for deriving, from the identification code associated with each cordless handset, an identification sequence of digits, and transmission means for transmitting the identification sequence associated with the cordless handset to the telecommunications network,
characterised in that the transmission means is arranged to transmit the digits to the telecommunications network when the cordless handset initiates a call.

A third aspect provides a method of operating a telephone subscriber equipment comprising a base station connected to a telephone network exchange line, and a plurality of cordless handsets selectively connectable by wireless connection to the base station; wherein when one of the cordless handsets establishes an outgoing call attempt, the base station and handset co-operate to allow the base station to identify which of the plurality of handsets is making the call attempt, and the base station transmits a sequence of digits, indicative of the cordless handset so identified, to the network by way of the exchange line connection;
characterised in that the sequence of digits is transmitted to the telephone network when the call attempt is made, and the response of the telephone network to the call attempt is controlled according to the transmitted sequence of digits.

This invention allows metering, billing, and user validation to be carried out by the exchange in conventional manner, without duplication of these functions in the base station.

The sequence of digits may have the same format as the digits that a user would actually generate by operating his/her keypad, typically a sequence of DTMF tones. Since the additional digits are generated automatically by the base station itself in response to the identification of the handset, the abuses described above can be prevented because the handset from which the call is made is identified.

In a preferred arrangement, the base station has means for identifying a verification code transmitted by a handset and generating a corresponding sequence of digits for transmission to the network. Some existing cordless telephone systems use identification codes to ensure that a handset is co-operating with the correct base station. However, these codes are quite lengthy, as they need to be unique. The invention allows the base station to transmit, to the network billing system or other systems, a much shorter code of just one or two digits, since it is only necessary for it to identify to the network which of the small number of handsets associated with the exchange line is in use. This reduces the signalling required to be transmitted. Moreover, the ability to translate the cordless handset identification code to another code allows the "Account Code" to be generated according to any format required by the telecommunications network system, without modification of either the handset or the network.

An embodiment of the invention will now be described with reference to the accompanying drawings in which:
Figure 1 shows a cordless base station for generating a handset identity.
Figure 2 shows a unit for generating a handset identity for wired handsets, which may be combined with the arrangements of Figure 1 to provide a base station for use with both types of handset.
Figure 3 is a flow chart illustrating the operation of the embodiment of figure 1.

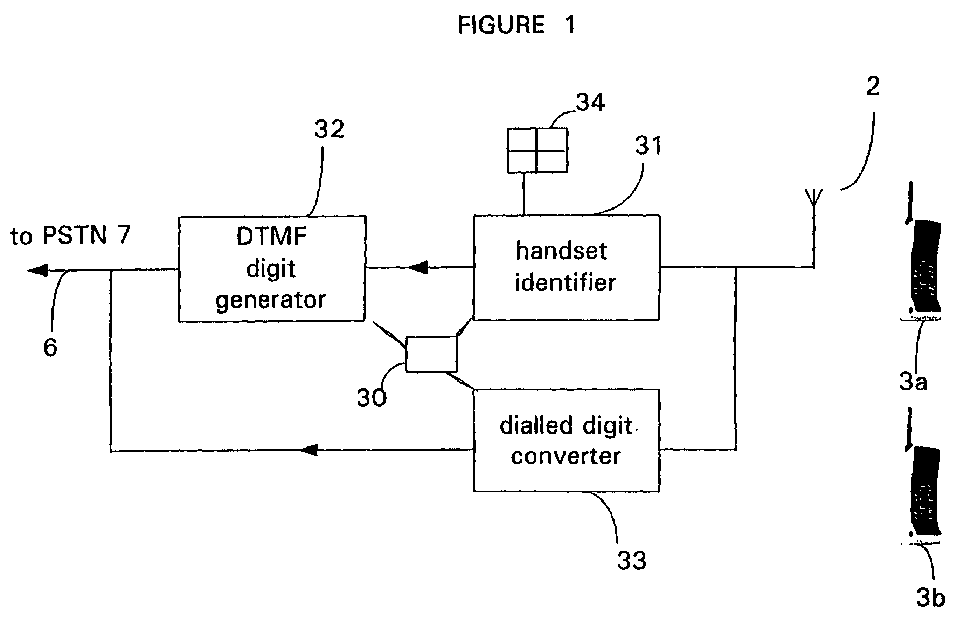

In Figure 1 an antenna 2 in communication with cordless units 3a, 3b provides inputs to a handset identification unit 31 with an associated register 34 and a dialled digit converter 33. The handset identification unit 31 provides an output to a DTMF digit generator 32. Both the DTMF digit generator 32 and the dialled digit converter 33 transmit DTMF digits to an exchange line 6. The apparatus is under the overall control of a controller 30.

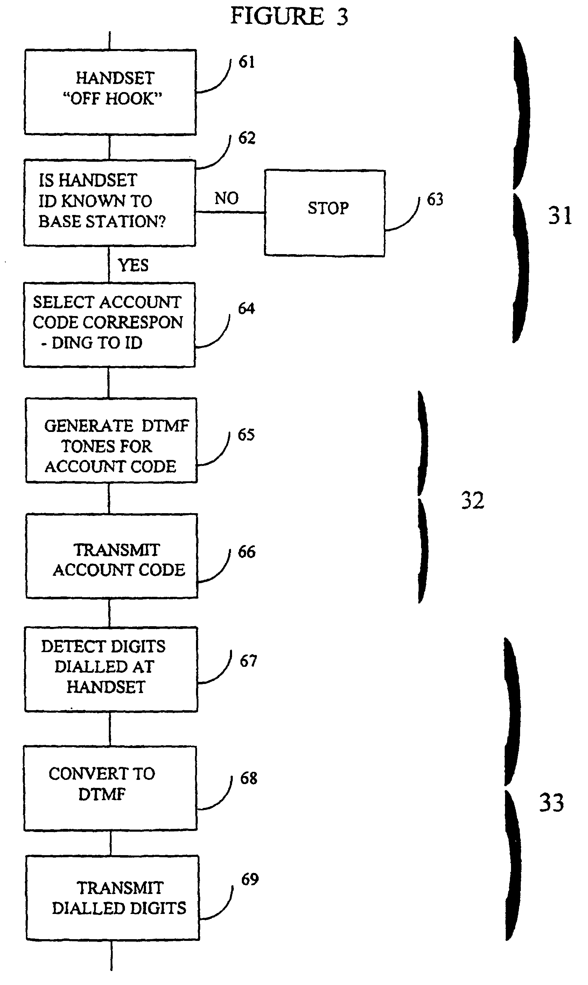

In existing cordless telephone systems such as these operating on the DECT system, individual handsets, e.g. 3a, 3b, are identified to their respective base stations, and vice versa, by the transmission of paging signals and responses, in order to ensure that the handset is co-operating with its correct base station, rather than another one located nearby. In systems with several handsets, each handset has its own identification code, so that the individual handsets can be distinguished by the base station. This allows the user of one handset to contact the user of another handset through the base station. In the present invention, the identification of a handset by the base station may be used in conjunction with the account code signal according to the identity of the handset. In figure 3 the various steps performed by the units 31, 32, 33 of the base station are indicated. Steps 61 to 64 are performed by the handset identifier 31, steps 65 and 66 by the digit generator 32, and steps 67, 68 and 69 by the dialled digit converter.

When a handset is put into an "off hook" condition, (which for a cordless handset is actually performed by operating a switch on the handset), this condition is detected by the handset and transmitted over the radio interface to antenna 2 and thus to the handset identifiers identified as 31. When such a signal is received it is detected by the handset identifier 31 (step 61).

The handset identifier first checks that the handset identifier is one of those stored in the register 34 (step 62). If it is not, this signifies that the handset belongs to another base station, as may occur for example, if a number of domestic users of cordless telephones have base stations within radio range of each other's handsets. If this is the case, then the handset identifier 31 disregards the "off hook" indicator from the handset (step 63) and takes no further action. If the handset is recognised then the handset identifier 31 selects the account code corresponding to the handset identifier indicated to it. These account codes are stored in the register 34, with one account code corresponding to each handset identity stored in the register.

The selected account code is then transmitted to a DTMF digit generator 32, which generates DTMF tones corresponding to the account code number it receives (step 65). These DTMF tones are then transmitted over the exchange connection 6 to the PSTN 7 (step 66). The dialled digit converter 33, controlled by the controller 30, then detects the digits dialled at the handset, 3a which are transmitted by conventional cordless telephony techniques over the air interface to the antenna 2. If the handset identifier has not recognised the base station's identity as one of those stored in the register 34, then the controller 30 prevents operation of the dialled digit converter 33. Provided that the dialled digit converter 33 is not so prevented, the digits are detected (step 67) and converted to DTMF tones (step 68) for transmission as DTMF tones over the exchange connection 6 to the PSTN 7 (step 69). The operation of the dialled digit converter 33 is suspended until the digits transmitted by the DTMF digit generator 32 have been transmitted. This may require the digits transmitted over the air interface from handset 3a to be stored in a buffer in the converter 33 until required.

In an alternative arrangement, not shown, the account code is transmitted after the dialled digits. In this case the steps 67, 68, 69 take place between steps 62 and 64 as shown in figure 3. Nevertheless the dialled digit converter 33 does not transmit the dialled digits until the handset identity has been verified in step 62.

It will be appreciated that much of the above operation already occurs in a conventional cordless base station. Only the steps 64, 65 and 66, generating the account code according to the handset identity, as verified by reference to the register 34, have been added. As both the handsets and the network are unmodified, the interaction between them and the base station can take place without modification of either interface. This ensures that all calls made by one handset's user are attributed to his or her own allocated account code, provided that the handset itself is not available for use by others (e.g. because it requires a code number to use it, or is kept in a secure place not available to the other users).

The handset identity code for a cordless system is necessarily complex, since its principal purpose is to avoid inadvertent connection to any base station other than its own. In contrast, the account code need only be sufficient to distinguish between users of the same exchange line, and is unlikely to require more than one or two keystrokes. The base station is therefore arranged to convert the long handset identity transmitted over the cordless telephone air interface into a shorter Account Code, in the form of a short sequence of DTMF tones.

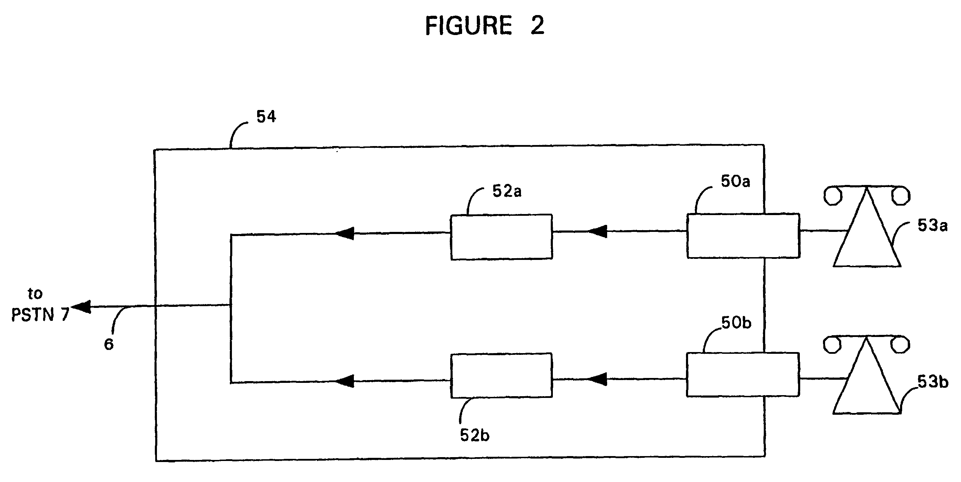

A base station configured as described above for connection to one or more cordless handsets may also be arranged to connect to one or more fixed handsets, by adding the features of Figure 2 which will now be described. Figure 2 shows two telephone handsets 53a, 53b each connected by a wired connection 50a, 50b to a base unit 54. The connections 50a, 50b may be lockable to prevent unauthorised interchanging of these connections. Each connection has an associated DTMF digit generator 52a, 52b which generates a predetermined "account code" sequence of digits when a call is initiated from the respective handset, for example by recognition of an "off-hook" condition. In this arrangement each handset 53a, 53b has its own associated account code generator 52a, 52b which is permanently connected to a socket 50a, 50b, dedicated to that handset. Each generator 52a, 52b is thus merely required to store a single stored sequence of DTMF digits. This sequence is transmitted to the PSTN 7 over an exchange link 6 in response to a predetermined condition. For example, if the network requires the account code before the dialled number, the sequence is transmitted on recognition of dial tone on the exchange line 6. If the network requires the dialled number before the account code, the code is transmitted on receipt of a signal from the exchange line 6 or from the respective handset 53a, 53b that the dialled number is complete. The exchange line 6 may be arranged to transmit a cue requesting an account code when the sequence of dialled digits is recognised as a valid number. Alternatively, the handset user may be required to operate a special "send" key to identify the end of the sequence of digits he has dialled himself, which automatically causes the account code to be transmitted.

## Claims

1. A telephone subscriber base apparatus comprising means for connection to a telecommunications network exchange line (6) and means for selectively establishing wireless communication with one of a plurality of associated cordless handsets (3a, 3b) to enable telecommunication between individual handsets (3a, 3b) and the telecommunications network (7) , wherein the handsets (3a, 3b) may each initiate outward calls over the exchange line (6) by transmission of dialled digits and wherein the base apparatus includes identification means (31) for identifying which of its associated cordless handsets is initiating a call, the apparatus further including digit generation means (32) controlled by the identification means (31) for generating additional digits for transmission to the telecommunications network (7), indicative of the cordless handset (3a, 3b) which initiated the call;
**characterised in that** the digit generation means (32) is arranged to transmit the digits to the telecommunications network (7) at call set-up.

2. A telephone subscriber base apparatus having means for establishing wireless communication with each of a plurality of cordless handsets (3a, 3b), means (31) for receiving and verifying identification codes associated with each cordless handset, exchange line connection means for connection to an exchange line (6) and means (32, 33) for transmitting dialled digits and other telecommunications signals between any of the cordless handsets (3a, 3b) and a telecommunications network (7) by way of the exchange line (6), further comprising means (32) for deriving, from the identification code associated with each cordless handset (3a, 3b), an identification sequence of digits, and transmission means for transmitting the identification sequence associated with the cordless handset to the telecommunications network (7),
**characterised in that** the transmission means is arranged to transmit the digits to the telecommunications network (7) when the cordless handset (3a, 3b) initiates a call.

3. Apparatus according to claim 1 or claim 2 wherein the base station has means for identifying a verification code transmitted by a handset and generating a corresponding sequence of dialled digits for transmission to the network (7).

4. Apparatus according to claim 3, wherein the sequence of dialled digits is shorter than the verification code.

5. A method of operating a telephone subscriber equipment comprising a base station connected to a telephone network exchange line (6), and a plurality of cordless handsets (3a, 3b) selectively connectable by wireless connection to the base station; wherein when one of the cordless handsets establishes an outgoing call attempt, it transmits a signal to the base station to allow the base station to identify which of the plurality of handsets is making the call attempt, and the base station transmits a sequence of digits, indicative of the cordless handset so identified, to the network (7) by way of the exchange line connection (6);
**characterised in that** the sequence of digits is transmitted to the telephone network (7) when the call attempt is made, and the response of the telephone network (7) to the call attempt is controlled according to the transmitted sequence of digits.

6. A method according to claim 5 wherein the base station identifies a verification code transmitted by a handset and generates a corresponding sequence of dialled digits for transmission to the network (7).

7. A method according to claim 6 wherein the sequence of dialled digits is shorter than the verification code.

## Patentansprüche

1. Teilnehmer-Telefonbasisgerät, das aufweist
Mittel zum Verbinden mit einer Amtsleitung (6) des Telekommunikationsnetzwerks und
Mittel zum selektiven Errichten einer drahtlosen Übertragung mit einem einer Vielzahl von zugehörigen schnurlosen Handapparaten (3a, 3b), um eine Telekommunikation zwischen einzelnen Handapparaten (3a, 3b) und dem Telekommunikationsnetzwerk (7) zu ermöglichen, wobei
jeder Handapparat (3a, 3b) abgehende Gespräche über die Amtsleitung (6) durch eine Übertragung von gewählten Nummern initiieren kann, und wobei
das Basisgerät Identifizierungsmittel (31) zum Identifizieren, welcher der zugehörigen schnurlosen Handapparate einen Anruf tätigt, umfasst, wobei das Gerät ferner
ein von dem Identifizierungsmittel (31) gesteuertes Nummern-Erzeugungs-Mittel (32) zum Erzeugen zusätzlicher Nummern zur Übertragung an das Telekommunikationsnetzwerk (7) umfasst, die den schnurlosen Handapparat (3a, 3b) angeben, welches den Anruf getätigt hat;
**dadurch gekennzeichnet, dass**
das Nummern-Erzeugungs-Mittel (32) ausgebildet ist, die Nummern bei Aufbau der Verbindung an das Telekommunikationsnetzwerk (7) zu übertragen.

2. Teilnehmer-Telefonbasisgerät mit
Mitteln zum Errichten einer drahtlosen Übertragung mit jedem einer Vielzahl von schnurlosen Handapparaten (3a, 3b),
Mitteln (31) zum Empfangen und Verifizieren von zu jedem schnurlosen Handapparat gehörenden Identifikationscodes, Amtsleitungs-Verbindungs-Mitteln zum Verbinden mit einer Amtsleitung (6), und
Mitteln (32, 33) zum Übertragen gewählter Nummern und anderer Telekommunikationssignale zwischen einem der schnurlosen Handapparate (3a, 3b) und einem Telekommunikationsnetzwerk (7) über die Amtsleitung (6),
das ferner aufweist
Mittel (32) zum Ableiten einer Identifikations-Nummemfolge aus dem zu jedem schnurlosen Handapparat (3a, 3b) gehörenden Identifikationscode, und
Übertragungsmittel zum Übertragen der zu dem schnurlosen Handapparat gehörenden Identifikations-Nummemfolge an das Telekommunikationsnetzwerk (7),
**dadurch gekennzeichnet, dass**
das Übertragungsmittel ausgebildet ist, die Nummern an das Telekommunikationsnetzwerk (7) zu übertragen, wenn der schnurlose Handapparat (3a, 3b) einen Anruf tätigt.

3. Vorrichtung gemäß Anspruch 1 oder Anspruch 2, wobei die Basisstation Mittel zum Identifizieren eines von einem Handapparat übertragenen Verifizierungscodes und zum Erzeugen einer dementsprechenden Folge gewählter Nummern zur Übertragung an das Netzwerk (7) aufweist.

4. Vorrichtung gemäß Anspruch 3, wobei die Folge gewählter Nummern kürzer als der Verifizierungscode ist.

5. Verfahren zum Betreiben eines Teilnehmer-Telefongeräts, das eine mit einer Amtsleitung (6) eines Fernsprechnetzes verbundene Basisstation und eine Vielzahl von schnurlosen Handapparate (3a, 3b) aufweist, die selektiv über eine drahtlose Verbindung mit der Basisstation verbunden werden können; wobei, wenn einer der schnurlosen Handapparate eine abgehende Gesprächsverbindung herstellt, ein Signal an die Basisstation übertragen wird, damit die Basisstation feststellen kann, welcher Handapparat aus der Vielzahl der Handapparate die Gesprächsverbindung herzustellen versucht, und die Basisstation eine Nummernfolge, die den schnurlosen Handapparat identifiziert, über die Amtsleitungsverbindung (6) an das Netzwerk (7) überträgt;
**dadurch gekennzeichnet, dass**
die Nummernfolge an das Fernsprechnetz (7) übertragen wird, wenn der Gesprächsaufbau unternommen wird, und die Antwort des Fernsprechnetzes (7) auf den Gesprächsaufbau entsprechend der übertragenen Nummernfolge gesteuert wird.

6. Verfahren gemäß Anspruch 5, wobei die Basisstation einen von einem Handapparat übertragenen Verifizierungscode identifiziert und eine entsprechende Folge gewählter Nummern zur Übertragung an das Netzwerk (7) erzeugt.

7. Verfahren gemäß Anspruch 6, wobei die Folge gewählter Nummern kürzer als der Verifizierungscode ist.

## Revendications

1. Appareil de base d'abonné téléphonique comprenant des moyens de liaison avec une ligne de communication de réseau de télécommunication (6) et des moyens d'établissement sélectif de communication sans fil avec l'un d'une pluralité de combinés sans fil associés (3a, 3b) pour permettre une communication entre les combinés individuels (3a, 3b) et le réseau de télécommunication (7), dans lequel les combinés (3a, 3b) peuvent chacun lancer des appels externes sur la ligne de communication (6) par émission de chiffres composés et dans lequel l'appareil de base comprend des moyens d'identification (31) pour identifier lequel de ses combinés sans fil associés est en train de lancer un appel, l'appareil comprenant en outre des moyens d'engendrer des chiffres (32) commandés par les moyens d'identification (31) pour engendrer des chiffres supplémentaires à émettre vers le réseau de télécommunication (7), indiquant le combiné sans fil (3a, 3b) qui a lancé l'appel, **caractérisé par le fait que** les moyens d'engendrer des chiffres (32) sont agencés pour émettre les chiffres vers le réseau de télécommunication (7) lors de l'établissement de l'appel.

2. Appareil de base d'abonné téléphonique comportant des moyens d'établissement de communications sans fil avec chacun d'une pluralité de combinés sans fil (3a, 3b), des moyens (31) de réception et de vérification de codes d'identification associés à chaque combiné sans fil, des moyens de liaison avec une ligne de communication pour une liaison avec une ligne de communication (6) et des moyens (32, 33) de transmission de chiffres composés et d'autres signaux de télécommunication entre l'un quelconque des combinés sans fil (3a, 3b) et un réseau de télécommunication (7) au moyen de la ligne de communication (6), comprenant en outre des moyens (32) pour obtenir, à partir du code d'identification associé à chaque combiné sans fil (3a, 3b), une séquence de chiffres d'identification, et des moyens d'émission pour émettre la séquence d'identification associée à chaque combiné sans fil vers le réseau de télécommunication (7), **caractérisé par le fait que** les moyens d'émission sont agencés pour émettre les chiffres vers le réseau de télécommunication (7) lorsque le combiné sans fil (3a, 3b) lance un appel.

3. Appareil selon la revendication 1 ou 2, dans lequel la station de base comporte des moyens pour identifier un code de vérification émis par un combiné et pour engendrer une séquence correspondante de chiffres composés à émettre vers le réseau (7).

4. Appareil selon la revendication 3, dans lequel la séquence de chiffres composés est plus courte que le code de vérification.

5. Procédé de commande d'un équipement d'abonné téléphonique comprenant une station de base reliée à une ligne de communication d'un réseau téléphonique (6), et une pluralité de combinés sans fil (3a, 3b) pouvant être reliés à volonté par une liaison sans fil à la station de base, dans lequel, lorsque l'un des combinés sans fil établit une tentative d'appel externe, il émet un signal vers la station de base pour permettre à la station de base d'identifier lequel de la pluralité de combinés est en train d'effectuer la tentative d'appel, et la station de base émet une séquence de chiffres, représentant le combiné sans fil ainsi identifié, vers le réseau (7) au moyen de la liaison par la ligne de communication (6) , **caractérisé par le fait que** la séquence de chiffres est émise vers le réseau téléphonique (7) lorsqu'est effectuée la tentative d'appel, et la réponse du réseau téléphonique (7) à la tentative d'appel est commandée en fonction de la séquence de chiffres émise.

6. Procédé selon la revendication 5, dans lequel la station de base identifie un code de vérification émis par un combiné et engendre une séquence correspondante de chiffres composés à émettre vers le réseau (7).

7. Procédé selon la revendication 6, dans lequel la séquence de chiffres composés est plus courte que le code de vérification.
